# EUROPÄISCHE PATENTSCHRIFT

(11) **EP 0 299 375 B1**
(45) Veröffentlichungstag und Bekanntmachung des Hinweises auf die Patenterteilung: **30.03.1994**
(21) Anmeldenummer: 88110915.1
(22) Anmeldetag: 08.07.1988
(51) Int. Cl.: G06F 11/18, G06F 15/16

(54) **Verfahren zum Zuschalten eines Rechners in einem Mehrrechnersystem**
Method for connecting a computer in a multicomputer system
Méthode pour connecter un calculateur dans un système multicalculateur

(30) Priorität: 11.07.1987 DE 3722991
(43) Veröffentlichungstag der Anmeldung: 18.01.1989
(73) Patentinhaber: Alcatel SEL Aktiengesellschaft, D-70435 Stuttgart (DE); ALCATEL N.V., NL-1077 XX Amsterdam (NL)
(72) Erfinder: Schulz, Harald, D-7000 Stuttgart 40 (DE); Müller, Werner, D-7140 Ludwigsburg (DE)
(74) Vertreter: Pechhold, Eberhard, Dipl.-Phys.

(56) Entgegenhaltungen:
- DE-A- 3 208 573
- MICROPROCESSING AND MICROPROGRAMMING. Bd. 20, Nr. 4-5, Mai 1987, AMSTERDAM NL Seiten 287 - 299; J. Osmany, O.J. Davies: "A Fault Tolerant Controller for High Integrity Systems"
- COMPUTER TECHNOLOGY REVIEW. Bd. VI, Nr. 3, 1986, LOS ANGELES US Seiten 51 - 59; L. Zsohar et al.: "Bus Hierarchy Facilitates Parallel Processing In 32-Bit Multicomputer"
- SYSTEMS & COMPUTERS IN JAPAN. Bd. 16, Nr. 1, 1985, NEW YORK US Seiten 9 - 17; T. Yoneda et al.: "Fault Diagnosis and System Reconfiguration of Fault-Tolerant System with Majority Voting"
- REGELUNGS-TECHNISCHE PRAXIS. Bd. 25, Nr. 10, Oktober 1983, MUNCHEN DE Seiten 408 - 416; R. Weiss: "Fehlertolerante Rechnersysteme"

## Beschreibung

Die Erfindung betrifft ein Verfahren gemäß dem Oberbegriff des Patentanspruchs 1.

Zur Steuerung von Eisenbahnanlagen oder Zügen, aber auch in anderen Bereichen der Technik, in denen besondere Sicherheit eines Prozesses gefordert wird, werden heute Mehrrechnersysteme eingesetzt, in denen mehrere Einzelrechner die notwendigen Steuer- und Überwachungsfunktionen parallel wahrnehmen. Steuerbefehle werden nur ausgegeben, wenn sie von allen oder von einer Mehrheit der Einzelrechner erarbeitet wurden und der Vergleich übereinstimmung ergibt. Derartige Rechnersysteme sind z.B. in der DE-PS 21 08 496, der DE-PS 28 13 079 und der DE-PS 32 08 573 beschrieben. Arbeitet in einem solchen System ein Rechner fehlerhaft, so wird er vom System abgetrennt und abgeschaltet. Ein Wiedereinschalten eines solchen abgetrennten Rechners, etwa nach einer Reparatur, erfordert bisher wegen der notwendigen Datensynchronisation einen Neustart des gesamten Rechnersystems. Ein solcher Neustart ist nur nach vorheriger Abtrennung aller Rechner vom Prozeß und bisher nur in einer Betriebspause der zu steuernden Anlage möglich.

Letzteres ist nachteilig, da bis zu einer möglichen Betriebspause oft lang gewartet werden muß und damit die Wahrscheinlichkeit für den zwischenzeitlichen Ausfall eines weiteren Rechners, der z.B. bei einem Drei-Rechner-System dann die Abschaltung des ganzen Systems nach sich zieht, steigt.

Diese Problematik wird auch in der Schrift "Systems and Computers in Japan" (vol. 16, no 1, 1985) in dem Artikel "Fault Diagnosis and System Reconfiguration of Fault-Tolerant System with Majority Voting" diskutiert und eine Lösung vorgeschlagen.

Der Erfindung liegt deshalb die Aufgabe zugrunde, ein Verfahren zum Wiedereinschalten eines zuvor abgeschalteten Rechners in einem Mehrrechnersystem der vorgenannten Art anzugeben, bei dem die signaltechnische Sicherheit gewahrt bleibt und das ein Zuschalten während des Betriebes der zu steuernden Anlage ermöglicht.

Diese Aufgabe wird durch die im kennzeichnenden Teil des Patentanspruchs 1 angegebenen Merkmale gelöst. Das erfindungsgemäße Verfahren ermöglicht das Zuschalten eines zuvor abgeschalteten Rechner in einer Weise, die nur eine sehr kurzzeitige Abtrennung der in Betrieb befindlichen Rechner vom Prozeß erfordert. Die Dauer einer solchen Abtrennung liegt in der Größenordnung von etwa 1 s. Eine solche Abtrennung läßt sich bei den meisten Prozeßsteuerungen ohne Sicherheitsverlust während des Betriebs vornehmen. Durch Vorankündigung der Abtrennung wird die Toleranz von Überwachungseinrichtungen, die sonst bereits bei kurzzeitigeren Unterbrechungen Fehler registrieren, während einer solchen Abtrennung erhöht. Ungeachtet der nur kurzen Zeit der Abtrennung der eingeschalteten Rechner erfolgt das Zuschalten signaltechnisch sicher, da die während des Aufrüstens des zuzuschaltenden Rechners - nur während dieser Zeit sind die eingeschalteten Rechner vom Prozeß abgetrennt - auf diesen übertragenen Daten nachträglich mit den Datenbeständen der eingeschalteten Rechner verglichen und außerdem alle Funktionen, Speicherinhalte und Übertragungsleitungen außerhalb des Abtrennungszeitraums auf Fehler überprüft werden.

Eine Ausgestaltung des Verfahrens nach der Erfindung ist im Anspruch 2 wiedergegeben und ermöglicht eine weitere Verkürzung der Dauer der Abtrennung der in Betrieb befindlichen Rechner vom Prozeß.

Eine Beschleunigung des Aufrüstens und damit eine Verkürzung der Abtrennungsdauer wird auch durch die Anwendung der im Anspruch 3 angegebenen Programmiersprache erreicht.

Anhand einer Figur soll nun das erfindungsgemäße Verfahren ausführlich beschrieben werden.

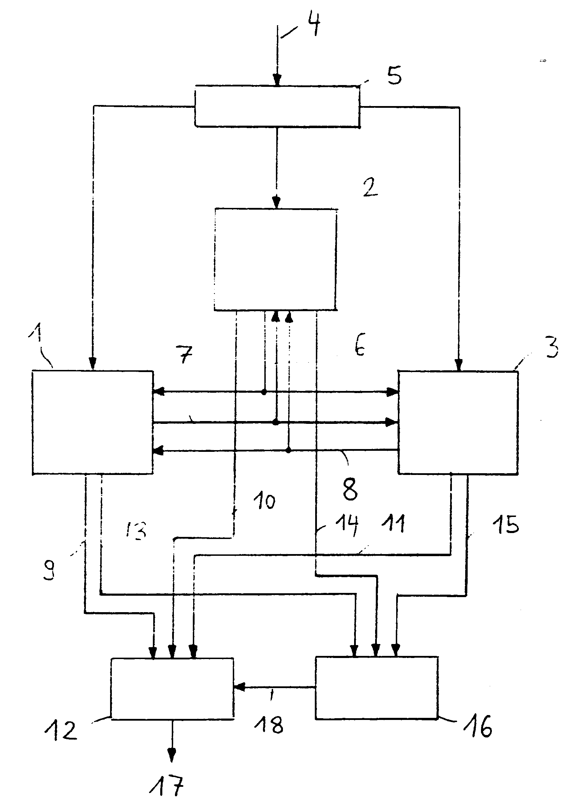

Die Figur zeigt schematisch 3 Rechner 1, 2 und 3, die über einen Eingangsentkoppler 5 mit einem gemeinsamen Eingabekanal 4 verbunden sind. Untereinander sind die Rechner über Datenleitungen 6, 7 und 8 so verbunden, daß jeder der Rechner mit jedem anderen Rechner Daten austauschen kann.

Ausgänge 9, 10, 11 der Rechner sind auf einen gemeinsamen Ausgabebaustein 12 geführt, der jeweils den Ausgang eines Rechners auf einen Ausgabekanal 17 aufschalten kann. Welcher Rechner auf den Ausgabekanal durchgeschaltet wird, bestimmt ein Ausgabe-Umschalter 16, der ebenfalls über Ausgangsleitungen 13, 14, 15 mit den drei Rechnern verbunden ist und den Ausgabebaustein 12 über eine Steuerleitung 18 steuert.

In einer größeren Steuerungsanlage bilden der Eingabekanal 4 und der Ausgabekanal 17 Schnittstellen, über die einerseits Eingabeinformationen, andererseits Verarbeitungsergebnisse in Form von gegen Übertragungsfehler gesicherten Datentelegrammen von oder zu anderen gleichartigen Rechnermodulen, oder Peripherieeinrichtungen übertragen werden können. Der Eingangsentkoppler hat dabei die Aufgabe, sicherzustellen, daß die Eingabeinformation allen drei Rechnern getrennt zugeführt wird und eine gegenseitige Beeinflussung der einzelnen Rechner über ihre Eingänge sicher verhindert wird.

Im störungsfreien Betrieb arbeiten die drei Rechner parallel, jedoch unabhängig voneinander das gleiche Programm ab und vergleichen gegenseitig ihre Zwischenergebnisse. Hierzu werden diese über die Datenleitungen 6, 7 und 8 gegenseitig ausgetauscht. Ein Rechner, dessen Ergebnis vom Ergebnis der beiden anderen Rechner abweicht, wird abgeschaltet und über den Ausgabe-Umschalter 16 von der Ausgabe abgetrennt.

Nach Abtrennung eines Rechners arbeitet das noch bestehende Zwei-Rechner-System, solange nicht noch ein weiterer Rechner ausfällt, unter voller Sicherheitsverantwortung weiter. Soll nun der abgeschaltete Rechner, nachdem der für den Ausfall ursächliche Fehler beseitigt ist, wieder zugeschaltet werden, so muß dieser in den Zustand versetzt werden, an der Stelle weiterarbeiten zu können, an der sich die beiden anderen Rechner bei der Abarbeitung ihres Programmes gerade befinden, d. h., er muß in einer Aufrüstphase den vollständigen aktuellen Datenbestand der anderen Rechner mitgeteilt bekommen und anschließend synchron mit den anderen Rechnern in Betrieb gehen.

Hierzu müssen die in Betrieb befindlichen Rechner während des Aufrüstens ihr laufendes Programm unterbrechen, denn es dürfen sich die in ihnen befindlichen Datenbestände während der Aufrüstphase nicht ändern, da der zuzuschaltende Rechner sonst bei Betriebsaufnahme Daten enthalten könnte, die von den Daten der in Betrieb befindlichen Rechner abweichen. Es muß außerdem sichergestellt sein, daß die an den zuzuschaltenden Rechner übertragenen Daten nicht verfälscht sind, und daß der Rechner selbst, sowie die zu ihm führenden Schnittstellen und Übertragungsleitungen fehlerfrei arbeiten.

Nach dem erfindungsgemäßen Verfahren nimmt der zuzuschaltende Rechner, nachdem dieser repariert und geprüft ist und seine spezifischen Daten wie Konstanten oder Diagnosedaten geladen wurden, Kontakt mit den beiden in Betrieb befindlichen Rechnern auf. Hierzu wartet er Routineaufrufe der in Betrieb befindlichen Rechner ab und antwortet, sobald er aufgerufen wird, mit einem vorgegebenen Bitmuster. Dieses Bitmuster, das allen Rechnern bekannt ist, ist so aufgebaut, daß bei seiner Übertragung sämtliche Bitplätze der zwischen den Rechnern bestehenden Datenverbindungen beansprucht und damit geprüft werden. Bei einwandfreier Übertragung der Bitmuster sehen die Rechner die Datenverbindung als ungestört an und bereiten die Aufrüstung des zuzuschaltenden Rechners vor. Hierzu benachrichtigen sie alle über serielle Schnittstellen mit ihnen verbundenen Einrichtungen, die den Datenfluß über die jeweilige Schnittstelle überwachen und bei einer unangekündigten Unterbrechung einen Fehler signalisieren würden, von einer bevorstehenden kurzen Unterbrechung. Diese Unterbrechung wird von den besagten Einrichtungen dann toleriert.

Die Unterbrechung des Datenflusses darf, da sie keine Betriebsunterbrechung zur Folge haben soll, nicht wesentlich länger als 1 Sekunde dauern. In dieser Zeit müssen sämtliche zur Aufrüstung notwendigen Daten auf den zuzuschaltenden Rechner übertragen werden. Hierzu werden die zu übertragenden Daten in zwei gleichgroße Gruppen aufgeteilt und jeder der beiden in Betrieb befindlichen Rechner überträgt eine der Datengruppen auf den zuzuschaltenden Rechner. Dies geschieht gleichzeitig über zwei der Datenverbindungen 6, 7 und 8. Die Daten werden hierzu in Assembler programmiert. Eine besondere Sicherung der Daten bei der Übertragung unterbleibt aus Zeitgründen.

Unmittelbar nach Aufrüsten des zuzuschaltenden Rechners gehen alle drei Rechner gleichzeitig in Betrieb. Hierbei ist der neu zugeschaltete Rechner jedoch von der Ausgabe abgetrennt, so daß der Prozeß weiterhin nur von den beiden zuvor bereits in Betrieb gewesenen Rechnern gesteuert wird. Der zugeschaltete Rechner arbeitet jedoch mit und sowohl er als auch die beiden anderen Rechner vergleichen nach und nach gegenseitig die während der Aufrüstphase übertragenen Daten, die auch durch Eingaben oder interne Weiterverarbeitung verändert worden sein können. Damit wird neben den übertragenen Daten zugleich die Eingabe des zugeschalteten Rechners geprüft. Nach einer vorgegebenen Zeit oder nach Abarbeitung bestimmter Prüfprogrammschritte wird, wenn kein Fehler entdeckt wurde, der zugeschaltete Rechner zur Ausgabe zugelassen. Diese Ausgabe wird zunächst eine vorbestimmte Zeit lang durch die anderen Rechner geprüft, bis der zugeschaltete Rechner schließlich zu sicherheitsverantwortlichem Betrieb zugelassen wird und auch bei Ausfall eines der anderen Rechner mit dem verbleibenden funktionsfähigen Rechner zusammen den Prozeß steuern darf.

## Patentansprüche

1. Verfahren zum Zuschalten eines Rechners in einem Mehrrechnersystem, in dem mehrere, über Ein- und Ausgabeschnittstellen mit einer zu steuernden Anlage verbundene Rechner parallel die gleichen Programme abarbeiten, ihre Verarbeitungsergebnisse gegenseitig austauschen und miteinander vergleichen und nur bei mehrheitlicher Übereinstimmung zur Weiterverwertung an die Anlage ausgeben,
**gekennzeichnet** durch folgende Schritte:
- der zuzuschaltende Rechner (1, 2 oder 3) prüft seine eigene korrekte Funktion
- nach erfolgreicher Prüfung nimmt er Kontakt mit den ursprünglich vor dem Zuschalten eingeschalteten Rechnern auf
- alle Rechner überprüfen die zum gegenseitigen Datenaustausch vorgesehenen Datenverbindungen (6, 7, 8) durch Übertragung und Auswertung vorgegebener Bitmuster
- die Rechner benachrichtigen alle diejenigen Einrichtungen der Anlage, mit denen sie über serielle Schnittstellen (4, 17) verkehren und die nicht vorangekündigte Unterbrechungen des Datenflusses über diese Schnittstellen als Fehler deuten, über eine bevorstehende Unterbrechung dieses Datenflusses
- die ursprünglich vor dem Zuschalten eingeschalteten Rechner trennen sich von der Anlage ab und rüsten den zuzuschaltenden Rechner auf, indem sie ihm die aktuellen, zum aktiven Betrieb benötigten Datenbestände mitteilen
- unmittelbar nach Aufrüstung des zuzuschaltenden Rechners setzen alle Rechner gleichzeitig ihr Programm fort, wobei der zuzuschaltende Rechner zunächst von der Ausgabeschnittstelle (12) abgetrennt bleibt
- die ursprünglich vor dem Zuschalten eingeschalteten Rechner prüfen die dem zuzuschaltendem Rechner übergebenen Daten Schritt für Schritt durch Vergleich mit den Daten der ursprünglich vor dem Zuschalten eingeschalteten Rechner und prüfen dabei auch die Eingabe des im Betrieb mithörenden zuzuschaltenden Rechners
- nach einer vorgegebenen Zeit oder nach Abarbeitung vorgegebener Prüfprogrammschritte wird der zuzuschaltende Rechner zur Ausgabe von Daten zugelassen
- die Empfänger der Daten prüfen die Ausgabe des zuzuschaltende Rechners durch Vergleich der von ihm ausgegebenen Daten mit den von den ursprünglich vor dem Zuschalten eingeschalteten Rechnern ausgegebenen Daten
- nach einer vorgegebenen Zeit oder nach Abarbeitung vorgegebener Prüfprogrammschritte wird der zuzuschaltende Rechner für die Prüfung auf mehrheitliche Übereinstimmung zugelassen

2. Verfahren nach Anspruch 1, dadurch gekennzeichnet, daß die zur Mitteilung an den zuzuschaltenden Rechner vorgesehenen Datenbestände in eine der Zahl der ursprünglich vor dem Zuschalten eingeschalteten Rechner entsprechende Zahl von Teildatenbeständen aufgeteilt werden und jeder der eingeschalteten Rechner einen Teildatenbestand an den Zuzuschaltenden Rechner überträgt.

3. Verfahren nach Anspruch 1 oder Anspruch 2, dadurch gekennzeichnet, daß zur Übertragung der Datenbestände an den Zuzuschaltenden Rechner als Programmiersprache Assembler verwendet wird.

## Claims

1. A method of reconnecting a computer to a multicomputer system in which a number of computers connected via input and output interfaces to an installation to be controlled execute the same programs in parallel, exchange and compare their results, and output their results to the installation only if a majority of the results agree,
**characterized** by the following steps:
- The computer to be reconnected (1, 2 or 3) checks its own correct operation;
- after a successful check, it establishes contact with the computers originally activated prior to the reconnection;
- all computers check the data links (6, 7, 8) provided for the data exchange by transmitting and evaluating predetermined bit patterns;
- the computers inform all these devices of the installation with which they communicate via serial interfaces (4, 17) and which interpret unnanounced interruptions of the data flow through said interfaces as errors about an imminent interruption of said data flow;
- the computers originally activated prior to the reconnection disconnect themselves from the installation and set up the computer to be reconnected by transferring to it the current data needed for the active mode of operation;
- immediately after the setup of the computer to be reconnected, all computers continue simultaneously to execute their programs, with the computer to be reconnected remaining disconnected from the output interface (12) for the time being;
- the computers originally activated prior to the reconnection check the data transferred to the computer to be reconnected step by step by comparing said data with the data of the computers originally activated prior to the reconnection, also checking the input of the computer to be reconnected, which is listening during operation;
- after a predetermined period of time or after execution of predetermined test-program steps, the computer to be reconnected is allowed to output data;
- the recipients of the data check the output of the computer to be reconnected by comparing the data outputted by said computer with the data outputted by the computers originally activated prior to reconnection;
- after a predetermined prior of time or after execution of predetermined test-program steps, the computer to be reconnected is admitted to the check for agreement between a majority of the results.

2. A method as claimed in claim 1, characterized in that the data to be transferred to the computer to be reconnected is divided into a number of data units, and that each of the activated computers transfers one data unit to the computer to be reconnected.

3. A method as claimed in claim 1 or claim 2, characterized in that the programming language used to transmit the data to the computer to be reconnected is an assembler language.

## Revendications

1. Procédé pour reconnecter un calculateur dans un système multicalculateur, dans lequel plusieurs calculateurs reliés, par l'intermédiaire d'interfaces d'entrée et de sortie, avec une installation à gérer, suivent en parallèle les mêmes programmes, échangennt mutuellement leur résultat de traitement et les comparent entre eux et no les transmettent à l'installation pour poursuite de la gestion qu'en cas de coincidences multiples,
procédé caractérisé par les pas suivants:
- le calculateur (1, 2 ou 3) à reconnecter vérifie son propre fonctionnement correct,
- cette vérification effectuée, il prend contact avec les calculateurs initialement connectés, avant cette reconnexion,
- par transmission et traitement de configurations prescrites de bits, tous les calculateurs vérifient les liaisons de données (6, 7, 8) prévues pour l'échange mutuel des données,
- les calculateurs préviennent de la survenance d'une interruption du flux de données tous les dispositifs de l'installation qu'ils desservent par l'intermédlaire d'interface série (4, 17) et qui considèrent comme défaillance toute interruption, non annoncée, du flux de données par ces interfaces,
- les calculateurs qui, avant cette reconnexion, étaient initialement connectés se séparent de l'installation et réarment le calculateur à reconnecter en ce sens qu'ils lui communiquent les états do données actuels, nécessaires pour remise on activité,
- immédiatement après ce réarmement du calculateur à reconnecter, tous les calculateurs poursuivent simultanément leur programme, le calculateur à reconnecter restant tout d'abord séparé do l'interface de sortie (12),
- les calculateurs qui, avant cette reconnexion, étaient initialement connectés vérifient pas à pas les données transmises au calculateur à reconnecter pour comparaison avec les données des calculateurs qui, avant cette reconnexion, étaient initialement connectés et y vérifient aussi l'entrée du calculateur à reconnecter, qui est à l'écoute du service,
- après un intervalle de temps prescrit ou après déroulement de pas prescrits du programme de vérification, le calculateur à reconnecter est autorisé à émettre des données,
- les récepteurs des données vérifient les signaux émis par le calculateur à reconnecter par comparaison des données émises par lui avec les données émises par les calculateurs qui, avant cotte reconnexion, étaient initialement connectés,
- après l'intervalle de temps prescrit ou après déroulement de pas prescrits du programme de vérification, le calculateur à reconnecter est admis pour la vérification d'une pluralité de coincidences.

2. Procédé selon la revendication 1, caractérisé par le fait que les états de données prévus pour être communiqués au calculateur à reconnecter sont répartis en un nombre d'état partiels de données correspondant au nombre des calculateurs qui, avant cette reconnexion, étaient initialement connectés et que chacun des calculateurs connectés transmet au calculateur à reconnecter un état partiel de données.

3. Procédé selon la revendication 1 ou la revendication 2, caractérisé par le fait que pour la transmission des états de données au calculateur à reconnecter, on emploie comme langage de programmation un langage assembleur.
